(19) Europäisches Patentamt
European Patent Office
Office européen des brevets

(11) Publication number: **0 217 560 B1**

(12) # EUROPEAN PATENT SPECIFICATION

(45) Date of publication of the patent specification: **07.11.90**

(51) Int. Cl.⁵: **C08G 2/22**, C08G 2/06, C08G 2/08

(21) Application number: **86306884.7**

(22) Date of filing: **05.09.86**

(54) **Process for preparing polymer of formaldehyde.**

(30) Priority: **09.09.85 JP 198750/85**

(43) Date of publication of application: **08.04.87 Bulletin 87/15**

(45) Publication of the grant of the patent: **07.11.90 Bulletin 90/45**

(84) Designated Contracting States: **AT BE CH DE FR GB IT LI LU NL SE**

(56) References cited:
**BE-A- 758 688**
**DE-A- 2 923 703**
**US-A- 3 803 094**

**CHEMICAL ABSTRACTS, vol. 72, no. 24, 15th June 1970, page 6, abstract no. 121998b, Columbus, Ohio, US; T. ISHII et al.: "Polymerization of formaldehyde by metal chelate catalysts", & KOGYO KAGAKU ZASSHI 1969, 72(12), 2644-9**
**CHEMICAL ABSTRACTS, vol. 81, no. 12, 23rd September 1974, page 24, abstract no. 64288e, Columbus, Ohio, US; & SU-A-394 396 (E.A. MILITSKOVA et al.) 22-08-1973**
**CHEMICAL ABSTRACTS, vol. 103, no. 2, 15th July 1985, page 1, abstract no. 6729m, Columbus, Ohio, US; T. AIDA et al.: "Synthesis of polymers with regulated**

(73) Proprietor: **POLYPLASTICS CO. LTD., 30 Azuchimachi 2-chome, Higashi-ku Osaka-shi(JP)**

(72) Inventor: **Inoue, Shohei, 7-1, Hakusan 3-chome Bunkyo-ku, Tokyo(JP)**
Inventor: **Hijikata, Kenji, 324, Miyashita, Fuji-shi Shizuoka(JP)**
Inventor: **Kageyama, Yukihiko, 815, Gendoji, Fujinomiya-shi Shizuoka(JP)**

(74) Representative: **Livsey, Gilbert Charlesworth Norris, HYDE, HEIDE & O'DONNELL 10-12 Priests Bridge, London SW15 5JE(GB)**

(56) References cited: (continuation)
**molecular weight", & YUKI GOSEI KAGAKU KYOKAISHI 1985, 43(4), 300-12**
**CHEMICAL ABSTRACTS, vol. 102, no. 20, 20th May 1985, page 1, abstract no. 167174w, Columbus, Ohio, US; S. INOUE et al.: "Control of polymer chain length. Control of polymerization", & GENDAI KAGAKU 1985, 166, 14-21**
**MACROMOLECULES, vol. 14, 1981, pages 1166-1169, American Chemical Society, Easton, US; T. AIDA et al.: "Living polymerization of epoxide catalyzed by the porphyrin-Et2AlCl system. Structure of the living end"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



ACTORUM AG

## Description

The present invention relates to a method of producing polymers with formaldehyde as a constituent unit.

Statement of Prior Art

Various methods of producing polymers with formaldehyde as a constituent unit have been known. They are generally described in the Plastic Materials Lecture, Vol. 13 "Polyacetal Resin" written by Matsushima and the like. Since polymers with formaldehyde as a constituent unit are superior in mechanical properties, they have been widely used but the reaction is difficult to control, the produced polymers have a wide molecular weight distribution, and the arrangement of blocks in block copolymers is remarkably difficult to control, due to a remarkably high reactivity of formaldehyde.

Japanese patent publication A (unexamined) No. 57-8223 teaches a process for preparing a block copolymer of two alkylene oxides in the presence of a complex catalyst comprising tetra-phenyl porphyrin and an organic aluminium compound.

Summary of the Invention

The present inventors investigated the matter that if the reaction of polymers with formaldehyde as a constituent unit can be controlled, mechanical properties of polymers can be controlled, thereby achieving a remarkably wide application. As a result, the present invention was achieved by finding that if a complex, which is obtained by a reaction between tetraphenylporphyrin or derivatives thereof and organometal compounds, is used as a catalyzer in the polymerization of polymers with formaldehyde as a constituent unit, the produced polymers have a narrowed molecular weight distribution and also the arrangement of blocks in block copolymers can be optionally designed.

That is to say, the present invention relates to a method of producing polymers with formaldehyde as a constituent unit, characterized by that a complex, which is obtained by a reaction between tetraphenylporphyrin or derivatives thereof and organometal compounds, is used as a catalyzer.

A polymer or copolymer of formaldehyde is obtained by the step of polymerizing formaldehyde and an optional co-monomer in the presence of a catalytically effective amount of a metal complex obtained between tetraphenylporphyrin or a derivative thereof and an organic metal compound. The compound is preferably a compound of a divalent or trivalent metal such as zinc, magnesium and aluminum. The comonomer is selected from an alkylene oxide, a lactone compound, a cyclic anhydride of a carboxylic acid and carbon dioxide.

It is possible in the invention that the comonomer(s) is added to the reaction system to obtain a block copolymer being controlled in the order of the blocks.

It is preferable from a practical point of view that the polymerization is effected in an organic solvent in an inert gas atmosphere of and in the absence of water.

It is preferable that formaldehyde forms the major part, 50 percent by weight or larger, of the obtained copolymer and that formaldehyde is contained in the copolymer in an amount of at least 1 percent by weight.

Tetraphenylporphyrin or derivatives thereof are obtained by a reaction between benzaldehyde or derivatives thereof and pyrrole.

Compounds of metals having a valence of 2 or 3 are preferably used as organometal compounds in the present invention. For example, compounds of metals such as zinc, magnesium and aluminium are preferably used, in particular preferably organoaluminium compounds. Specifically, diethylaluminium chloride and triethylaluminium are shown. In the latter case, compounds having an activated hydrogen as an anionic species such as compounds of alcohol, carboxylic acid, phenol and sulfonic acid may be additionally used.

Usual ligands can be used as a complex catalyzer in the present invention. These ligands include tertiary amines, phosphines, phosphites, thiazolium and the like. Above all, imidazol derivatives are particularly preferable. The use of these ligands leads to a further narrowed molecular weight distribution. Ligands can be added at a ratio of 0.1 to 3.0 moles based on 1 mole of metal porphyrin, preferably 0.5 to 2.0 moles, and in particular preferably 0.8 to 1.5 moles.

Polymers with formaldehyde as a constituent unit used in the present invention include homopolymers or copolymers of formaldehyde and constituent units other than formaldehyde in copolymers with formaldehyde as a constituent unit are at least one kind of compound selected from the group consisting of alkylene oxide, lactone, cyclic carboxylic acid anhydride and carbon dioxide, preferably alkylene oxides, and in particular preferably compounds of $C_9$ or less having an epoxy ring represented by the following general formula (I) or (II):

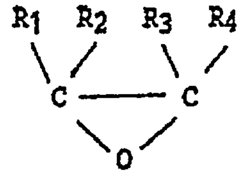

(I)

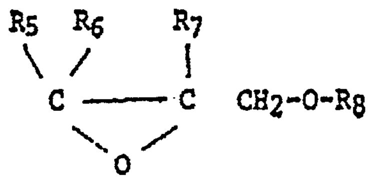

(II)

(wherein $R_1$ - $R_8$ are each a hydrogen atom or a hydrocarbon radical; any two of $R_1$ - $R_4$ may be in a continuous ring construction).

Of these compounds ethylene oxide is in particular preferable.

Molecular formaldehyde, which is obtained by the decomposition of paraformaldehyde, trioxane and the like, is preferably the formaldehyde used in the present invention. It can be used in the gaseous form or the liquid form. In either case formaldehyde is necessary to dry in the usual manner.

Solvents used in the present invention include hydrocarbons such as benzene, toluene and xylene and halogenated hydrocarbons such as chlorinated methylene, chloroform and dichlorethane.

The polymerization in the present invention is carried out by the polymerization between formaldehyde and a complex catalyzer, which is obtained by a reaction between tetraphenylporphyrin or derivatives thereof in the presence of solvents under an inert gas atmosphere, or by obtaining a prepolymer by adding at least one kind of compound selected from the group consisting of alkylene oxide, lactone, cyclic carboxylic acid anhydride and carbon dioxide and then adding formaldehyde to the resulting prepolymer without delay. It is also possible by repeating the above described reaction to increase a number of blocks. Since it is possible to control a quantity of constituent units to be used and a number of repeated times, the block length and the number of repeated blocks can be optionally designed. A ratio of block monomers in blockcopolymers can be optionally selected.

Polymers obtained according to the present invention show a narrowed molecular weight distribution and copolymers containing an intended repeated unit construction can be obtained.

A method of producing polymers with formaldehyde as a constituent unit according to the present invention can be used also as a method of producing oligomers having a remarkably low polymerization degree.

Polymers and oligomers obtained according to the present invention can be used as materials for surface active agents, dispersion dyes, polyurethane and the like. In addition, they can be used as materials for setting paints and resists. Also they can be used as standard samples for measuring molecular weights and molecular weight distributions of other compounds.

## Preferred Embodiments

The present invention is described below with reference to the preferred embodiments.

### Example 1

80 ml (84.8 g) benzaldehyde and 56 ml (53.6 g) pyrole were added to 3 liters propionic acid. The resulting mixture was subjected to a reaction under reflux for 30 min. and then left to stand for twenty-four hours. The reaction mixture was filtered and then a sediment was recrystallized from a methanol-chloroform solvent mixture to obtain α, β, γ, δ-tetraphenylporphyrin in a yield of 20%.

A catalyzer solution 20 ml containing a complex catalyzer 0.68 g therein was prepared by a reaction between diethylaluminium chloride 0.12 g and α, β, γ, δ-tetraphenylporphyrin of 0.61 g at room temperature in the presence of methylene chloride solvent of ml under a dry nitrogen atmosphere.

An additional methylene chloride solvent 20 ml was added to the tetraphenylporphyrin complex catalyzer solution 20 ml and then a solution of dry liquid formaldehyde in methylene chloride was added to the resulting mixture within 3 days in a divided manner. The resulting mixture was subjected to a polymerization reaction at room temperature under a nitrogen atmosphere. After stopping the polymerization reaction the reaction products were separated by the filtration and then subjected to an end acetylation. The reaction products were tested for molecular weight distribution and a melting point.

The results are shown in Table 1.

Example 2

Methylene chloride 20 ml as a solvent was added to a complex catalyzer 1 mmol obtained in the same manner as in Example 1. Purified ethylene oxide 15 mmol was added to the resulting mixture. The resulting mixture was subjected to a reaction for 24 hours at room temperature under a nitrogen atmosphere and immediately liquid formaldehyde was added in the same manner as in Example 1. Subsequently, ethylene oxide 15 mmol was added again and then the resulting mixture was subjected to a reaction for 24 hours. After polymerization, the reaction products were tested in the same manner as in Example with the results as shown in Table 1. The composition ratio of blocks was calculated from a value of NMR.

Example 3

Block copolymers were produced in the same manner as in Example 2 excepting that the ethylene oxide of 30 mmol was used in both the first time and the second time. After polymerization, the reaction products were tested in the same manner as in Example 1 with the results as shown in Table 1.

Example 4

Vapourized formaldehyde was introduced into a complex solution obtained in the same manner as in Example 1 and the resulting mixture was subjected to a reaction. After polymerization, the reaction products were tested on the molecular weight distribution and a melting point with the results as shown in Table 1.

Example 5

l-methylimidazol 1.2 mmol was added to a solution containing a complex catalyzer 1 mmol obtained in the same manner as in Example 1 and the resulting mixture was subjected to a reaction for 3 hours. Subsequently, the reaction mixture was subjected to a polymerization reaction in the same manner as in Example 1. After polymerization, the reaction products were tested on the molecular weight distribution and a melting point in the same manner as in Example 1 with the results as shown in Table 1.

Comparative Example 1

Dry trioxane (97 parts by weight), ethylene oxide (3 parts by weight) and methylal (0.3 parts by weight) as a molecular-weight controlling agent were put in an autoclave made of stainless steel. The mixture was subjected to a polymerization reaction in the presence of $BF_3$ as a catalyzer at 80°C under a nitrogen atmosphere. The resulting polymers and a melting point in the same manner as in Example 1 with the results as shown in Table 1.

Table 1

| No. | Quantity of monomers used: Formaldehyde (mol) | Quantity of monomers used: Ethylene oxide (mmol) | Reaction rate (%) | Molecular weight | Molecular *1 weight distribution | Composition ratio of block | Melting *2 point (°C) |
|---|---|---|---|---|---|---|---|
| Example 1 | 2 | - | 65 | $\bar{M}w$ 35,000<br>$\bar{M}n$ 23,000 | 1.52 | - | 166 |
| Example 2 | 3 | In the first time: 15<br>In the second time: 15 | 60 | $\bar{M}w$ 60,100<br>$\bar{M}n$ 40,100 | 1.50 | EO*3 1.7<br>FA*4 98.3 | 171 |
| Example 3 | 3 | In the first time: 30<br>In the second time: 30 | 60 | $\bar{M}w$ 60,400<br>$\bar{M}n$ 40,000 | 1.51 | EO 3.4<br>FA 96.6 | 170 |
| Example 4 | 2 | - | 50 | $\bar{M}w$ 31,100<br>$\bar{M}n$ 21,000 | 1.48 | - | 161 |
| Example 5 | 2 | - | 60 | $\bar{M}w$ 34,800<br>$\bar{M}n$ 25,500 | 1.37 | - | 168 |
| Comparative Example 1 | 3 | 68 | 65 | $\bar{M}w$ 77,500<br>$\bar{M}n$ 33,000 | 2.35 | - | 163 |

(Notes) *1: This was measured by the GPC using a colum filled with polystyrene gel manufactured by Toyo Soda Co., Ltd. and hexafluoroisopropyl alcohol as a solvent.

*2: This was measured by the DSC.

*3: EO is an ethylene oxide radical.

*4: FA is a formaldehyde radical.

## Claims

1. A process for preparing a polymer or copolymer of formaldehyde, which comprises the step of polymerizing formaldehyde and an optional co-monomer in the presence of a catalytically effective amount of a metal complex obtained between tetraphenylporphyrin or a derivative thereof and an organic metal compound.

2. A process as claimed in Claim 1, in which said compound is a compound of a divalent or trivalent metal.

3. A process as claimed in Claim 1, in which said compound is a compound of zinc, magnesium or aluminum.

4. A process as claimed in Claim 1, in which said co-monomer is selected from an alkylene oxide, a lactone compound, a cyclic anhydride of a carboxylic acid and carbon dioxide.

5. A process as claimed in Claim 1, in which the comonomer(s) is added to the reaction system to obtain a block copolymer being controlled in the order of the blocks.

6. A process as claimed in Claim 1, in which said copolymer is a copolymer of formaldehyde and an alkylene oxide having an epoxy group containing 9 or less carbon atoms.

7. A process as claimed in Claim 1, in which the polymerization is effected in an organic solvent in an inert gas atmosphere and in the absence of water.

## Patentansprüche

1. Verfahren zur Herstellung eines Formaldehydpolymers oder -Copolymers, welches den Schritt der Polymerisation von Formaldehyd und eines fakultativen Comonomers in Gegenwart einer katalytisch wirksamen Menge eines aus Tetraphenylporphyrin oder einem Derivat davon und einer organischen Metallverbindung erhaltenen Metallkomplexes umfaßt.

2. Verfahren nach Anspruch 1, in welchem die Verbindung eine Verbindung eines divalenten oder trivalenten Metalles ist.

3. Verfahren nach Anspruch 1, in welchem die Verbindung eine Zink-, Magnesium- oder Aluminiumverbindung ist.

4. Verfahren nach Anspruch 1, in welchem das Comonomer aus einem Alkylenoxid, einer Laktonverbindung, einem cyclischen Anhydrid einer Carbonsäure und Kohlendioxid gewählt ist.

5. Verfahren nach Anspruch 1, in welchem das (die) Comonomer(en) dem Reaktionssystem zugesetzt wird (werden), um ein Blockcopolymer mit gesteuerter Ordnung der Blöcke zu erhalten.

6. Verfahren nach Anspruch 1, in welchem das Copolymer ein Copolymer aus Formaldehyd und einem Alkylenoxid mit einer Epoxygruppe, welche 9 oder weniger Kohlenstoffatome enthält, ist.

7. Verfahren nach Anspruch 1, in welchem die Polymerisation in einem organischen Lösungsmittel in einer Inertgasatmosphäre und in Abwesenheit von Wasser durchgeführt wird.

## Revendications

1. Un procédé de production d'un polymère ou copolymère de formaldéhyde, qui comprend l'étape consistant à polymériser du formaldéhyde et un comonomère facultatif en présence d'une quantité catalytiquement efficace d'un complexe de métal formé entre la tétraphénylporphyrine ou l'un de ses dérivés et un composé organique de métal.

2. Un procédé tel que revendiqué dans la revendication 1, dans lequel ledit composé est un composé de métal divalent ou trivalent.

3. Un procédé tel que revendiqué dans la revendication 1, dans lequel ledit composé est un composé du zinc, du magnésium ou de l'aluminium.

4. Un procédé tel que revendiqué dans la revendication 1, dans lequel ledit comonomère est choisi parmi un oxyde d'alkylène, une lactone, un anhydride cyclique d'un acide carboxylique et l'anhydride carbonique.

5. Un procédé tel que revendiqué dans la revendication 1, dans lequel le ou des comonomères sont ajoutés au système réactionnel de façon à produire un copolymère séquencé dont l'ordre des séquences est bien déterminé.

6. Un procédé tel que revendiqué dans la revendication 1, dans lequel le copolymère est un copolymère du formaldéhyde et d'un oxyde d'alkylène comportant un groupe époxy et contenant 9 ou moins de 9 atomes de carbone.

7. Un procédé tel que revendiqué dans la revendication 1, dans lequel la polymérisation est effectuée dans un solvant organique sous une atmosphère de gaz inerte et en l'absence d'eau.